# EUROPEAN PATENT APPLICATION

(11) **EP 2 189 489 A1**
(43) Date of publication of application: **26.05.2010**
(21) Application number: 08020068.6
(22) Date of filing: 18.11.2008
(51) Int. Cl.: C08H 8/00, C08L 97/02, B27N 3/00

(54) **Lignocellulosic fiberboards made with tannin and phenol-oxidizing enzyme**

(71) Applicant: Kompetenzzentrum Holz GmbH, 4021 Linz (AT)
(72) Inventor: Widsten, Petri, 9300 St. Veit an der Glan (AT); Hummer, Alfred, 9300 St. Veit an der Glan (AT); Kandelbauer, Andreas, 9300 St. Veit an der Glan (AT)
(74) Representative: Dungler, Karin

(57) **Abstract**

The invention deals with a method of manufacturing lignocellulosic fiberboards by use of an activating system comprising tannin and/or tannin derivates and at least one enzyme with phenol-oxidizing properties. By the method in accordance with the invention fiberboards having an internal bond (IB) strength of at least 0,7MPa are provided.

## Description

Fiberboards are engineered panels used in the furniture and construction industries for boarding, flooring, and furniture applications. They are made from thermo-mechanically pulped (= defibrated/ fiberized/refined) wood or other lignocellulosic material; in most cases the fibers are mixed with a synthetic thermosetting resin binder.

The conventional industrial process of fiberboard manufacturing comprises the steps of (1) thermo-mechanical pulping (= defibration/ refining/fiberization) of lignocellulosic raw material such as wood chips by pressurized preheating of the raw material followed by its pressurized defibration using a disc refiner, (2) optionally drying and treating the fibers with a thermosetting resin adhesive such as urea-formaldehyde (UF) or phenol-formaldehyde (PF), (3) forming the (resinated) fibers into mat and optionally drying the mat to a desirable moisture content, and (4) compressing the mat into a fiberboard under heat and pressure. The mat-forming step involves the use of either water or air as the fiber distributing medium in the wet and dry processes, respectively. The resination/drying step is carried out in the blowline section of the refiner where fibers are suspended in a turbulent air flow at an elevated temperature.

Fiberboards are mainly classified according to their density and manufacturing method (wet- or dry process). Hardboards (HB) are fiberboards (EN 316) of uniform density made with the wet process that have a density of ≥ 900 kg/m³. Medium-density fiberboard (MDF, density - 650-880 kg/m³) is made with the dry process. High-density fiberboard (HDF) is mostly classified as MDF with a density of ≥ 800 kg/m³ (EN 316) and up to 880 kg/m³, although HDF is sometimes distinguished from MDF. The main difference between the wet and dry processes is the use of water or air, respectively, as the fiber distributing medium during mat formation. MDF is produced in different thickness classes (1.8 mm to > 45 mm). Most types of MDF have an uneven thickness density profile with the density increasing in going from core to surface. A major difference between HB and MDF is that while HB contains little or no added binder, MDF contains about 8-12% UF or other synthetic binder.

MDF and HB need to meet certain industrial standards in terms of mechanical strength and dimensional stability. Mechanical strength is evaluated by testing the internal bond (IB) strength as well as the modulus of rupture (MOR) and modulus of elasticity (MOE) of the boards. Testing of dimensional stability includes measuring the thickness swell after a 24-h cold water soak. The standards vary according to board thickness, type (MDF or HB), and their intended end-use environment. For general purpose 4-6-mm-thick MDF, for example, the IB strength, MOR, and MOE should be at least 0.65 MPa, 23 MPa, and 2700 MPa, respectively, while the thickness swell should not exceed 30% (standards from EN 622-5). The requirements for the corresponding HB products (EN 622-2) are similar.

Fiberboards are usually made with formaldehyde-based binders which pose several problems. Firstly, the resin components are derived from the increasingly more costly and non-renewable petroleum and natural gas. Secondly, formaldehyde is carcinogenic and there are health concerns relating to the formaldehyde emissions during manufacturing, machining, and end-use of the products. Thirdly, the resins limit the recycling and disposal options of used fiberboard products e.g. by burning. Increasingly stringent formaldehyde emission limits for adhesively bonded wood products call for formaldehyde-free or low-emitting adhesive systems to replace high-emitting adhesive systems. UF resins, which are the predominant resin type used in MDF production due to their relatively low cost, are known for their high formaldehyde emissions. Examples of more expensive but formaldehyde-free adhesives suitable for MDF are polyvinyl acetate (PVA), polymeric isocyanates such as pMDI, and soy protein with a PAE cross-linker. PF and melamine-urea-formaldehyde (MUF) resins emit less formaldehyde than UF but are also more costly.

It thus seems that an ideal fiberboard bonding system should fulfil the following criteria: (1) independence from non-renewable resources such as petrochemicals whose price is set to increase with increasing demand; (2) no need for added formaldehyde or other toxic components; (3) easy recyclability, burning for energy or disposability with household waste. So far, two kinds of such non-conventional approaches, based on the use of phenol-oxidizing enzymes, have been used for fiberboard manufacturing on laboratory and/or pilot scale.

Phenol-oxidizing enzymes such as laccase and peroxidases are obtained from white-rot fungi, bacteria, and other natural sources. They include phenoloxidases such as laccase and any other type of enzymes such as peroxidases able to catalyze the oxidation of phenolic substrates regardless of their origin. In the presence of oxygen (O₂) or hydrogen peroxide, respectively, laccase and peroxidases catalyze the oxidation of phenolic substrates to phenoxy radicals and give water as the by-product. For the purposes of the present invention, particularly preferred phenol-oxidizing enzymes are laccases and peroxidases obtained from white-rot fungi such as Myceliophtora thermophila, Trametes hirsuta, or Coriolus versicolor.

The so-called one-component (or "binderless") bonding systems contain no added (phenolic) cross-linking binder material. In these systems, the accessible lignin in the lignocellulosic fibers, located mainly at the fiber surface, is treated with an oxidant system (= activator) able to convert phenolic hydroxyl groups into relatively stable phenoxy radicals. Lignin is the cementing material that forms the backbone of all woody plants, binding the fibers together, and consists of polymerized phenylpropane units. When the activated fibers are brought into close contact during hot-pressing, cross-linking of the radicals formed on the fiber surfaces create new interfiber bonds which improve the board properties. The activator is a phenol-oxidizing enzyme such as laccase or peroxidase or an inorganic oxidant system such as Fenton's reagent (H₂O₂ + Fe²⁺). Two-component systems, such as the one in the present invention, include an added cross-linking material, typically of a phenolic type such as technical lignin such as kraft lignin from the sulphate pulping process, or lignosulfonate (LS) or LS-containing spent sulfite liquor (SSL) from sulfite pulping.

Contacting the fibers with the enzyme and any added cross-linking material can take place when the fibers are in a non-suspended state or when they are suspended in gas or in water. They may be applied to the fibers as aqueous solutions, separately or together, by any means such as spraying, blending, or impregnation. In addition, either or both could be added to the lignocellulosic raw material in solid form or as an aqueous solution.

WO 03/047826A discloses the binderless manufacture of fiberboard or other compressed layered structures by spraying laccase or other activating (radical-forming) agent onto lignocellulosic fibers as the fibers are "in a fluffed state" (suspended in a turbulent air flow) in the blowline section of the MDF production process. A crucial step for the success of that process is the preheating of the lignocellulosic raw material at unusually high pressure and temperature prior to defibration to achieve a high degree of lignin plasticization. Natural lignin has very low phenolic hydroxyl group content and is insoluble in water; therefore it is a poor substrate for phenol-oxidizing enzymes. During defibration lignin has to be soft enough to facilitate formation of sufficient low-molecular weight lignin fragments of high reactivity (high phenolic hydroxyl content and water solubility) toward the radical-generating activator such as laccase. Part of the fragmented lignin is present in the fiber surface which has substantially higher lignin content than the bulk lignin content of the fibers. When contacted with the activator, free (phenoxy) radicals are generated in the lignin fragments at the fiber surface. During hot-pressing these radicals cross-link, forming covalent interfiber bonds which improve the board properties. However, to produce fibers of sufficient reactivity toward an enzymatic activator and to obtain boards of high mechanical strength (internal bond, IB, > 1.0 MPa), the preheating of the raw material has to be carried out at unusually high pressures and temperatures (1.2-1.6 MPa; ∼ 180-202°C) which may be achievable at a pilot plant but are beyond the possible range (up to ∼ 0.8-1.0 MPa, ∼ 170-180°C) for typical preheating units of industrial fiberboard plants. A certain amount of lignin fragments is also formed when the preheating pressure is around 0.8 MPa; however, this amount of lignin fragments is often insufficient to enable the production of boards of high mechanical strength. Irrespective of the preheating temperature, it is also difficult to obtain boards of sufficiently low thickness swell using this method.

EP0565109A1 describes the treatment (= incubation) of wood fibers with laccase or peroxidase over a prolonged period prior to their fabrication into fiberboards. However, drawbacks of this method are the need for a separate process stage, the long incubation times (up to seven days) and relatively low IB strength of the boards (≤ 0.9 MPa). The separate incubation step is incompatible with existing fiberboard plants using continuous production processes which would incur investment costs upon adapting this technology.

In terms of two-component systems which contain added (phenolic) material acting as a binder between the lignocellulosic particles, the use of LS or SSL as an adhesive for various lignocellulosic products such as wood composite boards is well known in the art. SSL is water-soluble at neutral pH (suitable for phenol-oxidizing enzymes) and contains a large LS fraction which can be activated by treatment with phenol-oxidizing enzymes. The bonding mechanism involves, at least in part, formation of free (phenoxy) radicals in the LS and the lignocellulosic particles and their cross-linking during subsequent hot-pressing. However, unless water resistance is not an issue, LS and SSL are unsuitable cross-linking materials for fiberboards made by enzymatic treatments because of their hydrophilicity. The hydrophilic (sulfonic acid) groups present in LS are carried over to the final product which then shows poor water resistance. Other technical lignins such as kraft lignin and organosolv lignins are mostly water-insoluble; however, their water-insolubility, condensed structure and high molecular weight reduce their reactivity, rendering them poor substrates for enzymatic adhesive applications.

The solution to the problem that not enough reactive material is present in lignocellulosic fibers after thermo-mechanical pulping at standard preheating conditions consists in adding reactive phenols to the fibers. WO 03/047826A suggests using "water-soluble carbohydrate material containing phenolic groups" or more specifically either monomeric phenols such as 1,2-catechol, guaiacol or 2,6-dimethylphenol, or water-soluble lignocellulosic material obtained from mechanical wood processing such as fiber water extracts as added cross-linking material. However, such monomeric compounds are not readily available at a reasonable cost from natural sources, and the use of phenols of synthetic origin would be contrary to the idea of synthetic resin-free fiberboard manufacturing. The use of water-soluble fiber fractions, sufficiently enriched in lignin fragments, is a better option; this material could conceivably be obtained by water-extraction of lignocellulosic (by)-products after which the rest of the (by)-products could still be used for another purpose. However, no examples of boards made with monomeric phenols or fiber water extracts were provided in the patent.

The present invention discloses method for fiberboard production which noes not suffer from the aforementioned drawbacks of the prior art. The basic concept of the invention is the addition of tannin and phenol-oxidizing enzyme, separately or together, at some stage of a fiberboard production process, while the resination step used in conventional fiberboard production is omitted. The reason for adding both tannin and phenol-oxidizing enzyme is to achieve formation of phenoxy radicals in the tannin on the one hand and in the lignin-based phenolic material naturally present in the fibers on the other hand. When pressed into boards, the cross-linking of the tannin- and lignin-based radicals binds the fibers together covalently via formation of intermolecular and intramolecular carbon-carbon and carbon-oxygen (ether) bonds. Other bonding mechanisms such as hydrogen bonding also contribute to adhesion but are not enough to enable the manufacture of durable fiberboards. The exact way that the lignocellulosic material is brought into contact with tannin and phenol-oxidizing enzyme can be varied depending on the requirements posed by the manufacturing equipment and process.

A preferred embodiment of the present invention is based on the use of hydrolyzable tannins, which are commercially-available water-soluble and mostly oligomeric polyphenols of high laccase reactivity obtained from the leaves, galls, and bark and wood of certain wood species. Because of their large phenolic hydroxyl group content, they are highly reactive toward phenol-oxidizing enzymes and are therefore better suited for enzymatic bonding methods than the compounds specified in WO 03/047826A (monomeric phenols or water-soluble carbohydrate material containing phenolic groups obtained from mechanical pulping). The simplest hydrolyzable tannins are gallotannins based on gallic acid (3,4,5-trihydroxyl benzoic acid) esters. Tannic acid, the commercial gallotannin product used in the examples of present invention, is obtained by extraction from galls and leaves of sumac and Aleppo oak. It is a heterogeneous mixture of mainly oligomeric galloyl esters with a nominal molecular weight of 1294 g/mol. Also possible but less preferred for the present invention because of their observed lower reactivity toward laccase are flavonoid-based, "condensed" tannins (tannin derivates) which are oligomeric or polymeric compounds based on catechin and similar polyphenols. These tannins are usually derived from the bark of trees such as chestnut, mimosa, and quebracho.

When tannin or its derivates is incorporated into an enzyme-based fiberboard manufacturing process, it provides additional highly reactive cross-linking material to supplement the reactive lignin fragments already present at the fiber surfaces. In the wet process used for HB production, part if not most of the lignin-based reactive material is extracted from the fibers when the fibers are formed into a mat with the aid of water or when the mat is pressed into a board at a high moisture content (≥ 20%). In dry process MDF production air is used in the mat-forming process and the mats are pressed into boards at a low moisture content (≥ 20%), typically 8-12%. Consequently, little undesirable extraction of reactive lignin fragments takes place in the dry process which from this point of view is more suitable for enzyme-based fiberboard manufacturing. However, a possible advantage of the higher fiber water content in the wet process is that phenol-oxidizing enzymes needs a certain amount of water (moisture) to function, and a higher water content may result in more radical formation in the fibers by improving the diffusion of enzyme and reactive phenols.

The present invention is based on the finding that the presence of tannin and phenol-oxidizing enzyme (in this case laccase) in the fiber mats prior to hot-pressing of the mats into boards gives fiberboards of superior quality compared to boards made (a) without tannin or laccase, (b) with tannin only, and (c) with laccase only.

Tannin or its derivatives could be incorporated into a fiberboard manufacturing process at different stages. For example, it could be added to the lignocellulosic raw material before defibration or mixed with the fibers afterwards using a blender. Another method is the preparation of aqueous tannin solutions which are then used to impregnate fiber mats. In dry-process manufacturing, tannin solution could also be sprayed onto the fibers in the blowline at the point where the fibers are resinated during conventional manufacturing as disclosed in WO 03/047826A. Phenol-oxidizing enzyme could be added together with tannin or separately during any of these stages. Each of these methods has its own advantages and disadvantages in terms of industrial feasibility on the one hand and effectiveness in terms of radical formation and cross-linking on the other hand. Regarding feasibility, the application of tannin and phenol-oxidizing enzyme should be able to be carried out with minimal changes to existing production processes to avoid investment costs and slowing down the production process. As for effectiveness in terms of final product properties, beneficial factors probably include (1) high moisture content of fiber-tannin mixture during the enzymatic treatment, (2) a homogeneous distribution of tannin and laccase on the fiber surfaces, and (3) minimal loss of tannin, lignin-based phenols, and enzyme during the process through washing or squeezing out from fiber mats or during spraying.

Potential lignocellulosic raw materials for fiberboards encompass any lignin-containing material such as that derived from different hardwood and softwood species such as acacia, alder, aspen, beech, birch, eucalypt, fir, maple, oak, pine, or spruce. Nonwood plant raw material can be obtained from annual and perennial plants, including straws of grain crops such as rice or wheat, and from other nonwood sources such as Abaca, bagasse, coir, flax, hemp, kenaf, jute, ramie, reed canary grass, or sisal. The lignocellulosic material can be in any physical shape that can be reduced to fibers or is already in a fibrous form (e.g., chips, planer shavings, saw dust, or recycled fibers).

The lignocellulosic fibers may be provided using any defibration process such as refining, grinding, or milling that produces fibers from a lignocellulosic material. Particularly preferred for the purposes of the present invention are methods involving disc refining in the presence of steam that produce fibers coated with lignin fragments. Specific examples of such processes are thermo-mechanical pulping (TMP) and chemi-thermo-mechanical pulping (CTMP). "Lignin fragments" refer to any type of native wood or nonwood lignin that has undergone depolymerization and/or degradation during defibration. It is characterized by lower molecular weight, higher phenolic hydroxyl group content, and better water solubility than native lignin.

In the following examples of the present invention, summarized in Table 1, HB of uniform density was manufactured by preparing fiber mats according to the wet process and impregnating the mats with a combined tannin-laccase solution (method #2). The choice of this method was dictated by the lack of suitable facilities and equipment for making dry-process MDF rather than by considerations such as technical superiority or industrial feasibility. In addition, boards were made using the traditional wet process by adding tannin and laccase to the fibers prior to mat formation (method #1). These methods were used to make fiberboards with a thickness of 4.3-4.8 mm and a target density of 920 kg/m³. The best boards made with method # 2 using both tannic acid and laccase (IB strength 1.4-1.6 MPa), which compares very favourably with the IB of boards made with laccase only, tannic acid only, or without tannic acid and laccase. The other mechanical properties, modulus of rupture (MOR) and modulus of elasticity (MOE), were also improved significantly. The use of wax resulted in some loss of mechanical properties but allowed the industrial thickness swell standard to be met.

**Table 1. Properties of tannin/phenol-oxidizing enzymes (TaP) fiberboards (examples 1-11)**

| Board # | Preparation method # | Laccase, nkat/g | Tannic acid, % | Wax, % | Thickness, mm | Density, kg/m³ | IB, MPa* | MOR, MPa* | MOE, MPa* | Thickness swell, %* |
|---|---|---|---|---|---|---|---|---|---|---|
| 1 | 1 | 0 | 0 | 0 | 4.4 | 904 | 0.63 | 26.5 | 2846 | 100 |
| 2 | 1 | 0 | 10 | 0 | 4.6 | 923 | 0.70 | 25.2 | 2759 | 74 |
| 3 | 1 | 500 | 0 | 0 | 4.8 | 904 | 0.74 | 26.5 | 2932 | 88 |
| 4 | 1 | 500 | 10 | 0 | 4.8 | 931 | 1.05 | 39.4 | 3949 | 95 |
| 5 | 1 | 0 | 0 | 0 | 4.4 | 920 | 0.39 | 23.9 | 3184 | 107 |
| 6 | 2 | 0 | 10 | 0 | 4.4 | 934 | 0.57 | 29.5 | 3610 | 47 |
| 7 | 2 | 500 | 0 | 0 | 4.4 | 912 | 0.73 | 37.0 | 3507 | 64 |
| 8 | 2 | 500 | 5 | 0 | 4.3 | 917 | 1.31 | 35.7 | 3717 | 54 |
| 9 | 2 | 500 | 7.5 | 0 | 4.4 | 931 | 1.34 | 37.2 | 3758 | 50 |
| 10 | 2 | 500 | 10 | 0 | 4.4 | 920 | 1.48 | 42.8 | 3864 | 42 |
| 11 | 2 | 500 | 12.5 | 0 | 4.4 | 939 | 1.55 | 51.2 | 4562 | 40 |
| 12 | 2 | 500 | 15 | 0 | 4.4 | 955 | 1.55 | 57.5 | 4841 | 44 |
| 13 | 2 | 500 | 5 | 2 | 4.5 | 939 | 0.52 | 28.7 | 3823 | 35 |
| 14 | 2 | 1000 | 10 | 0 | 4.4 | 944 | 1.51 | 46.7 | 4264 | 40 |
| 15 | 2 | 1000 | 10 | 2 | 4.5 | 920 | 0.84 | 28.1 | 3468 | 27 |
| 16 | 2 | 1000 | 10 | 5 | 4.8 | 962 | 1.20 | 27.7 | 3972 | 28 |

| | | | | | | | | | | |
|---|---|---|---|---|---|---|---|---|---|---|
| *Values in bold meet European standards for 4-6 mm-thick MDF for general purposes (EN 622-5) and for 3.5-5.5 mm-thick HB for general purposes (EN 622-2; no standard specified for MOE). Values in italics comply only with the HB standards. | | | | | | | | | | |

### Preparation method 1

### Example 1 (control)

### Board # 1 in Table 1

Mixed beech/spruce (33:66) wood chip furnish was defibrated as part of normal industrial HB production at a preheating pressure of 0.9 MPa and preheating time of 150 s. Fresh, never-dried pulp (1300 g) with a moisture content of 40% was fabricated into HB using standard wet process methods including mat formation at a fiber consistency of 2.6%. The mat with a moisture content of - 60% was pressed into a board at 190°C and 7 bars for 7 minutes.

### Example 2

### Board # 2 in Table 1

A HB was prepared as in Example 1 except that the fibers were combined with an aqueous solution of tannic acid (10% on dry fiber weight) prior to mat forming. The pH of the tannin solution was adjusted to 6.0.

### Example 3

### Board # 3 in Table 1

A HB was prepared as in Example 1 except that the fibers were combined with an aqueous solution of laccase (500 nkat/g on dry fiber) prior to mat forming (laccase: Novozym 51003, activity 9000 nkat/g as measured against ABTS).

### Example 4

### Board # 4 in Table 1

A HB was prepared as in Examples 2 and 3 except that the fibers were combined with a freshly prepared aqueous mixture of tannic acid (10% on dry fiber weight, pH 6.0) and laccase (500 nkat/g on dry fiber) prior to mat forming.

### Preparation method 2

### Example 5 (control)

### Board # 5 in Table 1

A fiber mat (∼ 300 g) was prepared as in Example 1 and placed in a wooden mould. The mat was impregnated with one litre of water (pH 6.0) and placed in an oven at 40°C. The mat was dried until it could be removed from the mould without breaking and then further dried at 40°C to moisture content of ∼ 50-60% before pressing into a fiberboard at 190°C and 7 bars for 3 minutes.

### Example 6

### Board # 6 in Table 1

A fiberboard was prepared as in Example 5 except that the impregnation solution contained 10% tannic acid (pH of solution 6.0) based on dry fiber weight.

### Example 7

### Board # 7 in Table 1

A fiberboard was prepared as in Example 5 except that the impregnation solution contained laccase (500 nkat/g based on dry fiber weight).

### Example 8

### Boards # 8-12 in Table 1

A fiberboard was prepared as in Example 5 except that the impregnation solution (pH 6.0) contained both tannic acid (5-15% based on dry fiber weight) and laccase (500 nkat/g based on dry fiber weight). Tannic acid and laccase were combined just before application.

### Example 9

### Board # 13 in Table 1

A fiberboard was prepared as in Example 8 using 5% tannic acid except that 2% wax based on dry fiber weight was added with the impregnation solution.

### Example 10

### Board # 14 in Table 1

A fiberboard was prepared as in Example 8 using 10% tannic acid based on dry fiber weight and a laccase dose of 1000 nkat/g based on dry fiber weight.

### Example 11

### Boards # 15 and 16 in Table 1

A fiberboard was prepared as in Example 10 except that 2% (board 15) or 5% (board 16) wax based on dry fiber weight was added with the impregnation solution.

By use of the method in accordance with the invention fiberboards having an internal bond (IB) strength of at least 0.7MPa are provided. Said improved IB-properties are caused by combination of tannin or tannin-derivates with at least one enzyme with ptxenol-oxidizing properties.

## Claims

1. A method of manufacturing a lignocellulosic fiberboard comprising the steps of:
- providing lignocellulosic material such as wood chips
- preheating and defibrating the lignocellulosic material by thermo-mechanical pulping,
- contacting the fibers with an activating system comprising tannin and/or tannin derivates and at least one enzyme with phenol-oxidizing properties,
- forming the activated fibers into a mat and
- hot-pressing the fiber mat so that bonds are formed between the radicals in the tannin and fibers, and a fiberboard is formed.

2. The method according to claim 1, wherein the fibers are contacted with the activating system at any time between pulping and formation of the fiber mat.

3. The method according to claim 2, wherein the fibers are contacted with the activating system by spraying in the blowline section of the fiberboard plant.

4. The method according to claim 1, wherein the fibers are contacted with the activating system after the formation of the fiber mat.

5. The method according to claim 4, wherein the fiber mat is impregnated with the activating system.

6. The method according to claim 1, wherein the lignocellulosic material is contacted with the tannin component of the activating system prior to defibration.

7. The method according to any of the claims 1-6, wherein the original lignocellulosic material or fibers produced from it are contacted with tannin and phenol-oxidizing enzyme separately.

8. The method according to any of the claims 1-7, wherein the phenol-oxidizing enzyme is a laccase.

9. The method according to any of the claims 1-7, wherein the phenol-oxidizing enzyme is a peroxidase.

10. The method according to any of the claims 1-9, wherein the tannin is based on gallotannic acid. For example, commercial tannic acid.

11. The method according to any of the claims 1-9, wherein the tannin is a flavonoid-based tannin. For example, commercial chestnut tannin.

12. The method according to any of the claims 1-11, wherein the fiberboard is a medium-density fiberboard (MDF).

13. The method according to any of the claims 1-11, wherein the fiberboard is a high-density fiberboard (HDF).

14. The method according to any of the claims 1-11, wherein the fiberboard is a hardboard (HB).

## Amended claims

### Amended claims in accordance with Rule 137(2) EPC.

**1.** A method of manufacturing a lignocellulosic fiberboard comprising the steps of:
- providing lignocellulosic material such as wood chips
- preheating and defibrating the lignocellulosic material by thermo-mechanical pulping,
- contacting the fibers with an activating system comprising hydrolyzable tannin and/or hydrolyzable tannin derivates and at least one enzyme with phenol-oxidizing properties,
- forming the activated fibers into a mat and
- hot-pressing the fiber mat so that bonds are formed between the radicals in the tannin and fibers, and a fiberboard is formed.

**2.** The method according to claim 1, wherein the fibers are contacted with the activating system at any time between pulping and formation of the fiber mat.

**3.** The method according to claim 2, wherein the fibers are contacted with the activating system by spraying in the blowline section of the fiberboard plant.

**4.** The method according to claim 1, wherein the fibers are contacted with the activating system after the formation of the fiber mat.

**5.** The method according to claim 4, wherein the fiber mat is impregnated with the activating system.

**6.** The method according to claim 1, wherein the lignocellulosic material is contacted with the hydrolyzable tannin component of the activating system prior to defibration.

**7.** The method according to any of the claims 1-6, wherein the original lignocellulosic material or fibers produced from it are contacted with hydrolyzable tannin and phenol-oxidizing enzyme separately.

**8.** The method according to any of the claims 1-7, wherein the phenol-oxidizing enzyme is a laccase.

**9.** The method according to any of the claims 1-7, wherein the phenol-oxidizing enzyme is a peroxidase.

**10.** The method according to any of the claims 1-9, wherein the hydrolyzable tannin is based on hydrolyzable gallotannin, for example commercial tannic acid.

**11.** The method according to any of the claims 1-10, wherein the fiberboard is a medium-density fiberboard (MDF).

**12.** The method according to any of the claims 1-10, wherein the fiberboard is a high-density fiberboard (HDF).

**13.** The method according to any of the claims 1-10, wherein the fiberboard is a hardboard (HB).
